(19) Europäisches Patentamt
European Patent Office
Office européen des brevets

(11) **EP 3 125 540 A1**

(12) **EUROPEAN PATENT APPLICATION**

(43) Date of publication:
**01.02.2017 Bulletin 2017/05**

(51) Int Cl.:
*H04N 7/14* (2006.01)    *H04L 12/18* (2006.01)

(21) Application number: **16181541.0**

(22) Date of filing: **27.07.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **31.07.2015 JP 2015152313**

(71) Applicant: **FUJITSU LIMITED
211-8588 Kanagawa (JP)**

(72) Inventors:
• **ODASHIMA, Shigeyuki
Kawasaki-shi, Kanagawa 211-8588 (JP)**
• **OKABAYASHI, Miwa
Kawasaki-shi, Kanagawa 211-8588 (JP)**

(74) Representative: **Ward, Gregory Peter
Haseltine Lake LLP
Lincoln House
300 High Holborn
London WC1V 7JH (GB)**

(54) **INFORMATION PRESENTATION METHOD, INFORMATION PRESENTATION APPARATUS, AND PROGRAM**

(57) There is provided an information presentation method for being executed by a computer in a system that allows interactive communication between information presentation apparatuses, which are utilized by users, by transfer of contents information, the information presentation method including delimiting the contents information for each given period of time and extracting feature information included in the delimited contents information for each given period of time, deciding, by referring to a recording unit in which specific information is registered, whether or not the specific information is included in the extracted feature information, changing, when the specific information is included in the extracted feature information, an output condition for the specific information in at least one of the information presentation apparatuses, and outputting the contents information on the basis of the changed output condition.

## FIG. 14

FIG.14A INITIAL STATE (THRESHOLD VALUE IS HIGH)

FIG.14C SOUND IS EASILY TO PASS BECAUSE THRESHOLD VALUE IS LOW

FIG.14B GENERATION OF SPECIFIC SOUND → THRESHOLD VALUE AT OWN SIDE IS LOWERED

FIG.14D IF SOUND DOES NOT PASS FOR A WHILE (= END OF CONVERSATION), THEN ORIGINAL THRESHOLD VALUE IS RESTORED

EP 3 125 540 A1

**Description**

The technology disclosed herein relates to an information presentation method, an information presentation program and an information presentation apparatus.

In a system that allows interactive communication between user terminals, interactive communication services have been proposed by which information of life sound or the like is sensed and appropriate life sound or the like is presented to watch the elderly. As an element technology common to the services, a technology is available wherein feature portions such as opening or closing sound of a door or laughter of people are extracted from collected life sound and so forth and presented to a user.

For example, a method has been proposed wherein such an interactive confirmation state as "whether communicating persons simultaneously confirm the state of the communication partners" is sensed to perform automatic changeover between a privacy protection state in which information to be sent to the other party side from within the substance of the conversation is restricted and a conversation state in which no such restriction is applied (refer to, for example, Patent Document 1 or 2).

CITATION LIST

PATENT DOCUMENTS

[Patent Document 1] Japanese Laid-open Patent Publication No. 2011-10095
[Patent Document 2] Japanese Laid-open Patent Publication No. 2006-093775
[Patent Document 3] Japanese Laid-open Patent Publication No. 2003-153322
[Patent Document 4] Japanese Laid-open Patent Publication No. 2013-074598

However, with the technology of the Patent Documents mentioned above, transmission of information is performed only after the communication parties simultaneously confirm the state of the respective communication partners. Therefore, even if the communication parties want to hold a conversation with each other, if they do not simultaneously confirm the situation of the respective communication partners, it is difficult to enter a conversation state.

For example, the technology has a problem that, if the sound to be conveyed to the communication partner like a notification "I have just come home" when returning home is interrupted, then it is hard to have a communication.

Therefore, it is desirable to make it possible to smoothly perform interactive communication in a system that allows interactive communication between information presentation apparatus used by users.

According to an aspect of an embodiment, there is provided an information presentation method for being executed by a computer in a system that allows interactive communication between information presentation apparatuses, which are utilized by users, by transfer of contents information, the information presentation method including delimiting the contents information for each given period of time and extracting feature information included in the delimited contents information for each given period of time, deciding, by referring to a recording unit in which specific information is registered, whether or not the specific information is included in the extracted feature information, changing, when the specific information is included in the extracted feature information, an output condition for the specific information in at least one of the information presentation apparatuses, and outputting the contents information on the basis of the changed output condition.

With the information presentation method, it is possible to smoothly perform interactive communication in a system that allows interactive communication between information presentation apparatus used by users.

The invention is described, by way of example only, with reference to the figures, in which:

FIG. 1 is a block diagram depicting an example of a hardware configuration of an information presentation apparatus according to first and second embodiments;
FIG. 2 is a block diagram depicting an example of a functional configuration of an information presentation apparatus according to the first embodiment;
FIG. 3 is a view illustrating an example of a life sound database (DB) in the first embodiment;
FIG. 4 is a view illustrating an example of a sound feature amount DB in the first embodiment;
FIG. 5 is a view illustrating an example of a sound cluster DB in the first embodiment;
FIG. 6 is a view illustrating an example of a score DB in the first embodiment;
FIG. 7 is a view illustrating an example of a sound list DB in the first embodiment;
FIG. 8 is a flow chart illustrating an example of an information presentation process in the first embodiment;
FIG. 9 is a flow chart illustrating an example of a feature amount calculation process in the first embodiment;
FIG. 10 is a view illustrating an example of a filter feature in the first embodiment;
FIGs. 11A and 11B are views illustrating examples of a feature amount in the first embodiment;
FIG. 12 is a flow chart illustrating an example of a threshold value changing process in the first embodiment;
FIGs. 13A and 13B are views illustrating examples of an output condition table in the first embodiment;

FIGs. 14A to 14D are views illustrating examples of an advantageous effect of a threshold value changing process and a threshold value restoration process in the first embodiment;

FIGs. 15A to 15D are views illustrating examples of an advantageous effect of a threshold value changing process and a threshold value restoration process in the first embodiment;

FIG. 16 is a flow chart illustrating an example of a threshold value restoration process in the first embodiment;

FIG. 17 is a flow chart illustrating an example of a feature sound learning process in the first embodiment;

FIGs. 18A to 18D are views illustrating examples of an advantageous effect of a feature sound learning process in the first embodiment;

FIG. 19 is a view depicting an example of a functional configuration of an information presentation apparatus according to the second embodiment;

FIGs. 20A to 20C are views illustrating examples of an output condition table and a word list DB in the second embodiment;

FIG. 21 is a flow chart illustrating an example of an information presentation process in the second embodiment;

FIG. 22 is a flow chart illustrating an example of a presentation condition changing process in the second embodiment;

FIGs. 23A to 23C are views illustrating examples of an advantageous effect of a presentation condition changing process in the second embodiment;

FIG. 24 is a flow chart illustrating an example of a presentation condition restoration process in the second embodiment;

FIG. 25 is a flow chart illustrating an example of a presentation condition learning process in the second embodiment; and

FIGs. 26A to 26D are views illustrating examples of a filter feature according to an embodiment.

In the following, aspects of embodiments of the disclosed technology are described with reference to the accompanying drawings. It is to be noted that, in the specification and the drawings, like elements including a substantially like functional configuration are denoted by like reference symbols, and overlapping description of them is omitted herein.

[Example of Hardware Configuration of Information Presentation Apparatus]

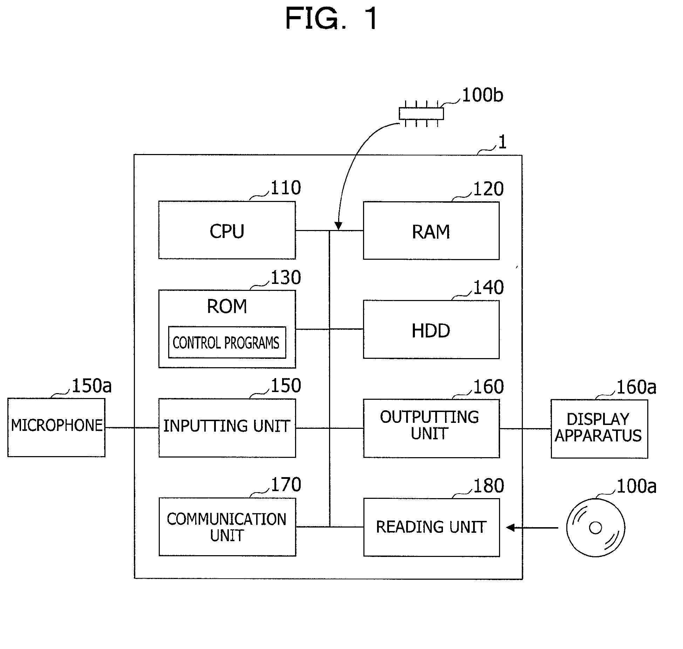

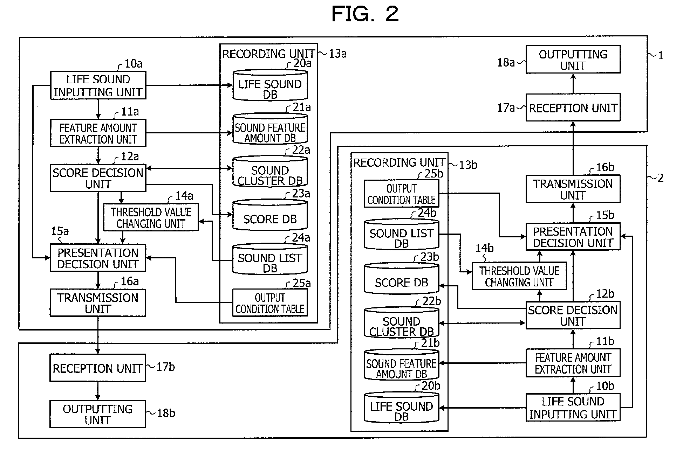

First, an example of a hardware configuration of an information presentation apparatus according to first and second embodiments of the technology is described with reference to FIG. 1. In the present embodiments, in an information presentation system that allows interactive communication, an information presentation apparatus 1 and another information presentation apparatus transfer contents information of sound or the like to each other. For example, the information presentation apparatus 1 and another information presentation apparatus 2 depicted in FIG. 2 include a common hardware configuration. Here, the hardware configuration of the information presentation apparatus 1 of FIG. 1 is described while description of the hardware configuration of the information presentation apparatus 2 is omitted herein.

The information presentation apparatus 1 is implemented by a general-purpose computer, a workstation, a desk top type personal computer (PC), a notebook type PC or the like. The information presentation apparatus 1 includes a central processing unit (CPU) 110, a random access memory (RAM) 120, a read only memory (ROM) 130, a hard disk drive (HDD) 140, an inputting unit 150, an outputting unit 160, a communication unit 170 and a reading unit 180. The components mentioned are coupled to each other by a bus.

The CPU 110 controls the components of hardware in accordance with control programs stored in the ROM 130. The RAM 120 may be, for example, a static RAM (SRAM), a dynamic RAM (DRAM) or a flash memory. The RAM 120 temporarily stores data generated upon execution of the programs by the CPU 110. The control programs may include an information presentation program for executing an information presentation method according to the first and second embodiments.

The HDD 140 has various databases hereinafter described (each hereinafter referred to also as "DB") stored therein. The control programs may otherwise be stored in the HDD 140. A solid state drive (SSD) may be provided in place of the HDD 140.

The inputting unit 150 includes a keyboard, a mouse, a touch panel and so forth for inputting data to the information presentation apparatus 1. Further, the inputting unit 150 includes, for example, a microphone 150a coupled thereto and inputs life sound and so forth collected by the microphone 150a.

It is to be noted that, in the present specification, the term "sound" is not limited to the "sound" of the narrow sense which is vibration in the air acquired by a microphone but signifies a concept of the broad sense including "vibration" propagating, for example, in the air, material or liquid as measured by a measuring instrument such as, for example, a microphone, a piezoelectric element or a laser micro displacement meter.

The outputting unit 160 outputs an image acquired by the information presentation apparatus 1 to a display apparatus 160a or outputs acquired sound to the speaker.

The communication unit 170 communicates with a different computer (for example, the information presentation apparatus 2) through a network. The reading unit 180 reads a portable storage medium 100a including a compact disk-ROM (CD-ROM) and a digital versatile disc-ROM (DVD-ROM). The CPU 110 may read a control program from the portable storage medium 100a through the reading unit 180 and store the control program into the HDD 140. Further, the CPU 110 may download a control program from a different computer through the network and store the control program into the HDD 140. Furthermore, the CPU 110 may read in a control program from a semiconductor memory 100b.

<First Embodiment>

[Example of Functional Configuration of Information Presentation Apparatus]

Now, an example of a functional configuration of an information presentation apparatus according to the first embodiment is described with reference to FIG. 2. The information presentation apparatus illustrated in FIG. 2 may be the information presentation apparatus 1 illustrated in FIG. 1. FIG. 2 depicts an example of functions of the information presentation apparatus 1 disposed at a user A side and the information presentation apparatus 2 disposed at a user B side, for example, when the user A and the user B perform interactive communication using the information presentation apparatuses 1 and 2, respectively. The information presentation apparatus 1 and the information presentation apparatus 2 include a same functional configuration. Here, the functional configuration of the information presentation apparatus 1 of FIG. 2 is described while description of the functional configuration of the information presentation apparatus 2 is omitted herein.

It is to be noted that the functions of the components of the information presentation apparatus 1 are implemented by cooperative operation of the control programs stored in the ROM 130 and hardware resources such as the CPU 110, the RAM 120 and so forth.

The information presentation apparatus 1 includes a life sound inputting unit 10a, a feature amount extraction unit 11a, a score decision unit 12a, a recording unit 13a, a threshold value changing unit 14a, a presentation decision unit 15a, a transmission unit 16a, a reception unit 17a and an outputting unit 18a. The recording unit 13a records a life sound DB 20a, a sound feature amount DB 21a, a sound cluster DB 22a, a score DB 23a, a sound list DB 24a and an output condition table 25a.

The life sound inputting unit 10a inputs life sound. The life sound includes sound and conversation generated when the user A lives. The recording unit 13a records inputted life sound into the life sound DB 20a. It is to be noted that the life sound inputting unit 10a is a functioning unit corresponding to the inputting unit 150 that is a hardware element.

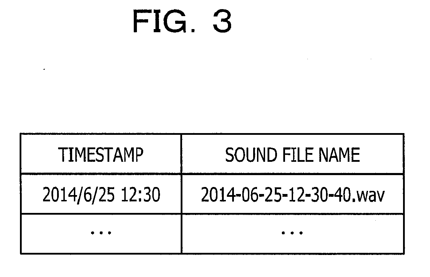

FIG. 3 illustrates an example of a data structure of the life sound DB 20a. The life sound DB 20a includes columns for a timestamp and a sound file name. In the timestamp, time at which life sound is acquired is stored.

The time to be used as the timestamp is time of the beginning or time of the end of life sound to be stored as a sound file. In the sound file name, a file name is stored.

The format of sound data to be stored into the life sound DB 20a may be an uncompressed format such as waveform audio format (WAV) (resource interchange file format (RIFF)) or audio interchange file format (AIFF). The format of voice data may be a compressed format such as moving picture experts group (MPEG)-1 audio layer-3 (MP3), Windows Media (registered trademark) Audio (WMA).

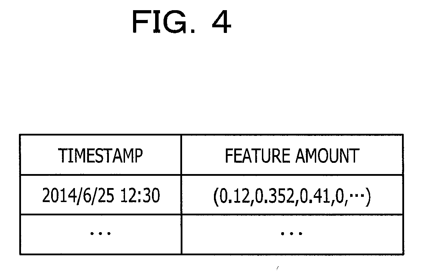

The life sound inputting unit 10a passes sound data to the feature amount extraction unit 11a. The feature amount extraction unit 11a delimits sound data into time windows and calculates a feature amount for each delimited time window. The recording unit 13a records the calculated feature amounts into the sound feature amount DB 21a. FIG. 4 illustrates an example of a data structure of the sound feature amount DB 21a. The sound feature amount DB 21a includes columns for a timestamp and a feature amount. In the timestamp, a timestamp of sound data is stored. The feature amount stores a feature amount of sound data. The feature amount extraction unit 11a passes the calculated feature amount to the score decision unit 12a.

The score decision unit 12a performs matching between a feature amount received from the feature amount extraction unit 11a and feature amounts of clusters stored in the sound cluster DB 22a to determine a cluster to which the sound data that is a processing target is to belong.

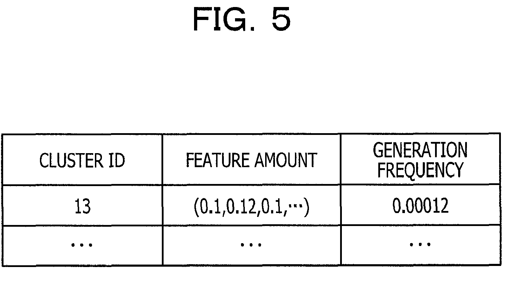

FIG. 5 illustrates an example of a data structure of the sound cluster DB 22a. The sound cluster DB 22a includes columns for a cluster identification (ID), a feature amount and a generation frequency. The cluster ID stores an ID for specifying each cluster. The feature amount stores a feature amount of each cluster, namely, a representative value of each cluster such as a center coordinate of the cluster or a median of data included in the cluster. The generation frequency stores a generation frequency of each cluster. The generation frequency of a cluster to which the sound data is to belong may be, for example, a generation frequency of delimited sound data or a weighted sum of generation frequencies of clusters existing in the proximity of the feature amount.

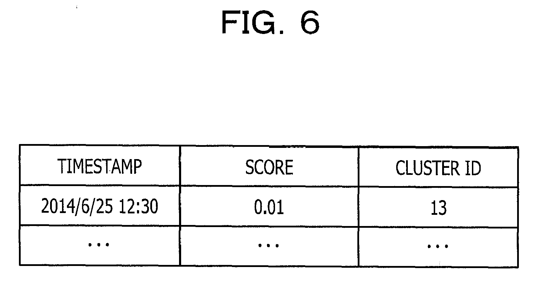

If a cluster to which sound data of a processing target is to belong is determined, then the recording unit 13a records the ID of the determined cluster into the score DB 23a. FIG. 6 illustrates an example of a data structure of the score DB 23a. The score DB 23a includes columns for a timestamp, a score and a cluster ID. The cluster ID stores the ID of a cluster to which sound data is to belong. In other words, the ID of the determined cluster is stored into the cluster ID corresponding to a timestamp of the sound data of the processing target.

The score decision unit 12a calculates a score from a generation frequency. In the present embodiment, the score decision unit 12a uses a negative logarithm of the generation frequency as a score. Therefore, as the generation frequency of data of specific sound increases, the score decreases, but as the generation frequency decreases, the score increases. It is to be noted that the calculation method of a score is not limited to this, but the generation frequency may be used as it is as a score.

The threshold value changing unit 14a changes (moderates or restores) a threshold value for deciding whether or not sound data is to be transmitted to the communication partner. As the threshold value increases, the sound data to be cut off increases, and most part of the conversation may not be transmitted to the communication partner. Therefore, the privacy can be protected by setting the threshold value to a high level. On the other hand, as the threshold value decreases, the sound data to be cut off decreases, and the conversation is transmitted to some degree to the communication partner. Therefore, it becomes easily to recognize an environment or a situation of the communication partner at a remote place by decreasing the threshold value. The threshold value changing unit 14a decreases the threshold value when specific sound registered in the sound list DB 24a is included in feature sound included in sound data.

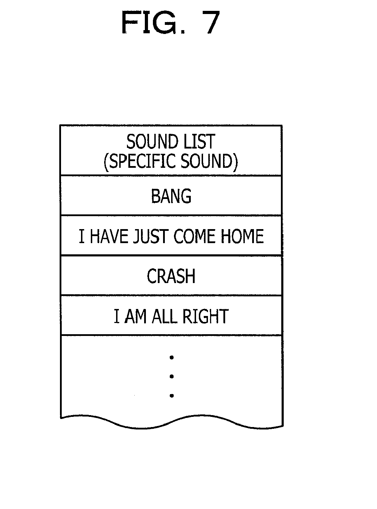

For example, an example of the sound list DB 24a is depicted in FIG. 7. In the sound list DB 24a, some kinds of life sound on the basis of which a state of the other party such as opening or closing sound of a door or tableware sound can be recognized are registered. In the sound list DB 24a, sound representative of some danger or abnormality or feature life sound such as conversation with urgency may be registered in advance. Sound data registered in the sound list DB 24a is an example of "specific sound information (hereinafter referred to also as 'specific sound')."

For example, if the threshold value is a fixed value, then sound of "are you all right?" following "crash (an example of the specific sound)" may be cut off and may not be transmitted to the communication partner. However, it is considered that there is a difference in status of the place between "are you all right?" following "crash" and "are you all right?" free from "crash." In other words, it is anticipated that the latter case is higher in emergency than the former and, in the situation of the latter case, it is better to convey the sounds to the communication partner and confirm the safety.

Therefore, in the present embodiment, the threshold value changing unit 14a lowers the threshold value only when specific sound registered in the sound list DB 24a is recognized thereby to allow sound outputted immediately after the specific sound is generated to be conveyed more readily to the communication partner. By moderating, when the urgency is high, the cutoff level of sound to make it easily to convey sound of a conversation or the like to the communication partner in this manner, when communication is demanded between users, such communication can be implemented. In particular, in such a case that, whereas the threshold value is set to a high level so as to cut off daily conversation to protect the privacy, where it is desirable to confirm the safety of life sound of a parent as in the case where the parent and a child live apart from each other, for example, the threshold value is lowered so as to allow life sound to be transmitted to the information presentation apparatus 1 of the child. This makes it possible to smoothly perform interactive communication in the system that allows interactive communication between the information presentation apparatuses 1 and 2 utilized by the users.

The presentation decision unit 15a decides, when the score recorded in the score DB 23a is equal to or higher than the threshold value, that the sound is low in generation frequency and then decides to transmit sound recorded in the score DB 23a in a corresponding relationship to the score so as to present the sound to the communication partner. When the score recorded in the score DB 23a is lower than the threshold value, the presentation decision unit 15a decides that the sound is sound outputted frequently and cuts off the sound.

The transmission unit 16a transmits sound data decided to be transmitted by the presentation decision unit 15a to the information presentation apparatus 2 of the communication partner. The reception unit 17a receives sound data transmitted from the information presentation apparatus 2 of the communication partner. The outputting unit 18a outputs the received sound data. It is to be noted that the outputting unit 18a is a functioning unit corresponding to the outputting unit 160 that is hardware. Meanwhile, the transmission unit 16a and the reception unit 17a are functioning units corresponding to the communication unit 170 that is hardware.

[Example of Information Presentation Process]

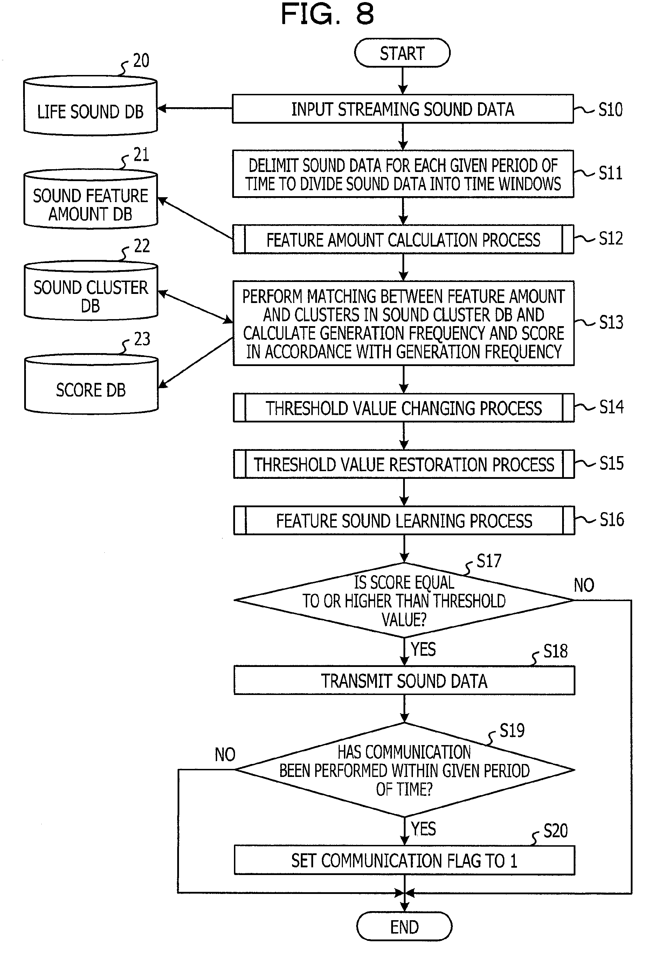

Now, the information presentation process according to the present embodiment is described with reference to FIG. 8. FIG. 8 is a flow chart illustrating an example of the information presentation process according to the first embodiment. The information presentation process depicted in FIG. 8 is executed separately by the information presentation apparatuses 1 and 2. In the following, description is given taking the information presentation process executed by the information presentation apparatus 1 as an example.

The life sound inputting unit 10a inputs streaming sound data using the microphone or the like (step S10). Then, the feature amount extraction unit 11a delimits the inputted sound data for each given period of time and performs processing for each delimited period of time. That is, the feature amount extraction unit 11a delimits sound data for each given period of time to divide the sound data into time windows (step S11). Then, the feature amount extraction unit 11a executes a feature amount calculation process for sound data in a time window (step S12). When the feature amount calculation process ends, the feature amount extraction unit 11a displaces the time window and repetitively performs a similar process for the sound data in the displaced time window.

(Example of Feature Amount Calculation Process)

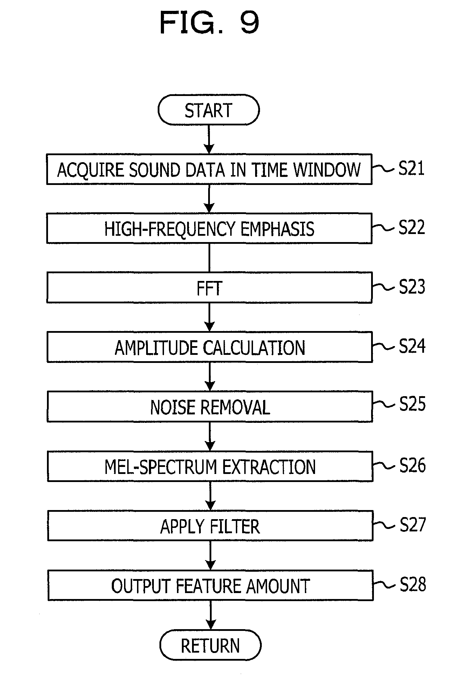

An example of the feature amount calculation process is described with reference to FIG. 9. The feature amount extraction unit 11a acquires sound data in a time window (step S21). Then, the feature amount extraction unit 11a successively performs processes of a high-frequency emphasis (step S22), a fast Fourier transform (FFT) (step S23), an amplitude calculation (step S24), a noise removal (step S25) and a mel-spectrum extraction (step S26) for the sound data in the time window. The processes mentioned are known technologies, and therefore, description of them is omitted herein.

Then, the feature amount extraction unit 11a applies a filter to the mel-spectrum obtained at step S26 (step S27). The feature amount extraction unit 11a outputs the mel-spectrum after the filter is applied as a feature amount (step S28), and the processing is returned to the calling source.

Here, the filter is a power function whose multiplier p is smaller than 1 and is represented, for example, by the following expression (1):

[Expression 1]

$$[0079] \qquad x_p(i) = (x_m(i))^p \ ... \ (1)$$

where $x_m(i)$ represents the ith component of the mel-spectrum feature; $x_p(i)$ represents the ith component of the feature amount; p represents the multiplier ($p \in R$, $0 \leq p < 1$); and R represents the entire real numbers.

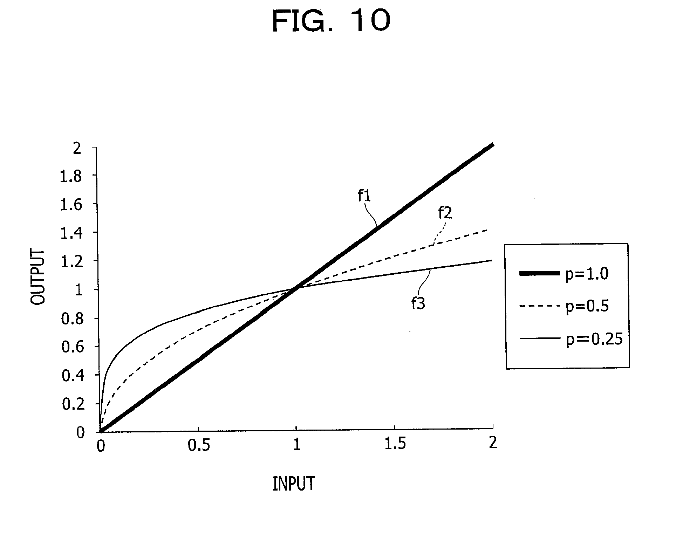

FIG. 10 is a graph illustrating an example of an input-output feature of a filter. The axis of abscissa indicates the input and the axis of ordinate indicates the output. Both of the axis of abscissa and the axis of ordinate are dimensionless. A graph f1 where the value of the multiplier p of the filter is 1 is depicted for reference, and the filter of the graph f1 is not used as the filter. Another graph f2 indicates a filter where the value of the multiplier p of the filter is 0.5, and a further graph f3 indicates a filter where the value of the multiplier p of the filter is 0.25. A power filter having a multiplier smaller than one power has an effect of suppressing the output power where the input has a value greater than 1 as depicted in FIG. 10, and it is guaranteed that, where the input is equal to or smaller than 1, the power filter has a value equal to or higher than 0 without fail. Accordingly, the problem that the feature amount shape is much different at a small sound volume, which arises in a case in which a mel-spectrum feature is used and the problem that the value diverges at an output equal to or lower than 1, which arises in a case in which a log filter is used, are solved. Further, since the sound volume and the frequency component are simultaneously taken into consideration in the feature amount, there is no necessity to handle the sound volume and the frequency components in separate processes. Therefore, the processing is easy.

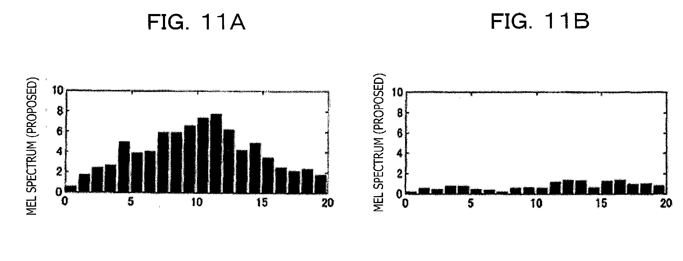

FIGs. 11A and 11B are graphs illustrating examples of a feature amount. The axis of abscissa indicates the frequency in a unit of kHz. The axis of ordinate indicates the spectrum value that is dimensionless. FIG. 11A indicates a feature amount obtained from cough voice, and FIG. 11B indicates a feature amount obtained from fan sound. As apparent from comparison between FIGs. 11A and 11B, the feature amount shape (spectrum value) is much different between them. Accordingly, the feature amounts can be considered suitable for classification between non-background sound (cough voice) and background sound (fan sound).

Referring back to FIG. 8, the feature amount extraction unit 11a stores the feature sound (feature amount) acquired by the feature amount calculation into the sound feature amount DB 21 a and performs matching of the feature amount and the feature amounts of the clusters stored in the sound cluster DB 22a (step S13). The feature amount extraction unit 11a calculates a score from the generation frequency of the matching sound cluster (step S 13). Then, the threshold value changing unit 14a performs a threshold value changing process (step S 14).

(Example of Threshold Value Changing Process)

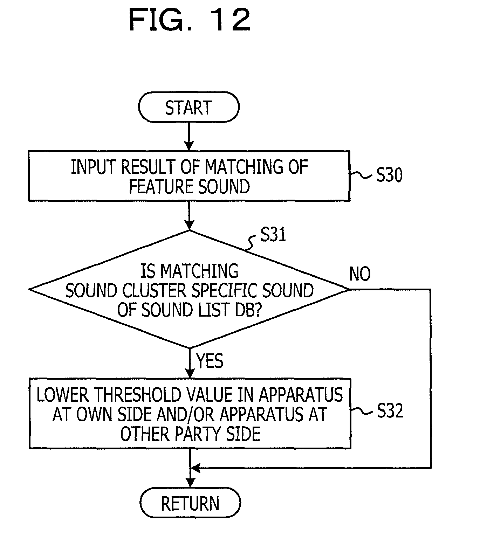

An example of the threshold value changing process is described with reference to FIG. 12. The threshold value changing unit 14a inputs a matching result between the feature sound included in the sound data for each time window and the sound clusters in the sound cluster DB 22a (step S30). Then, the threshold value changing unit 14a decides whether the matching sound cluster is specific sound registered in the sound list DB 24a (step S31). If the threshold value changing unit 14a decides that the matching sound cluster is such specific sound, then it lowers the threshold value in at least one of the information presentation apparatus 1 at the own side and the information presentation apparatus 2 at the other party side (step S32), and then returns the processing to the calling source. On the other hand, if the threshold value changing unit 14a decides that the matching sound cluster is not any specific sound, then the processing is returned to the calling source without changing the threshold values.

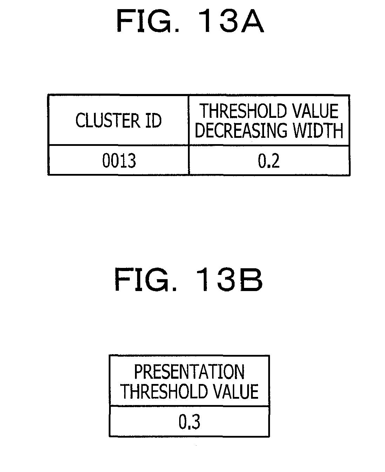

As a result, into the output condition table 25a, the decreasing width for the threshold value is recorded for the cluster ID (in other words, for the sound cluster) as depicted in FIG. 13A. Further, as depicted in FIG. 13B, in the output condition table 25a, a presentation threshold value (initial set value: fixed value) is recorded. From the tables illustrated in FIGs. 13A and 13B, the threshold value that is used by the presentation decision unit 15a upon transmission of sound data is the value "0.1" that is obtained by subtracting the threshold value decreasing width "0.2" from the presentation threshold value "0.3."

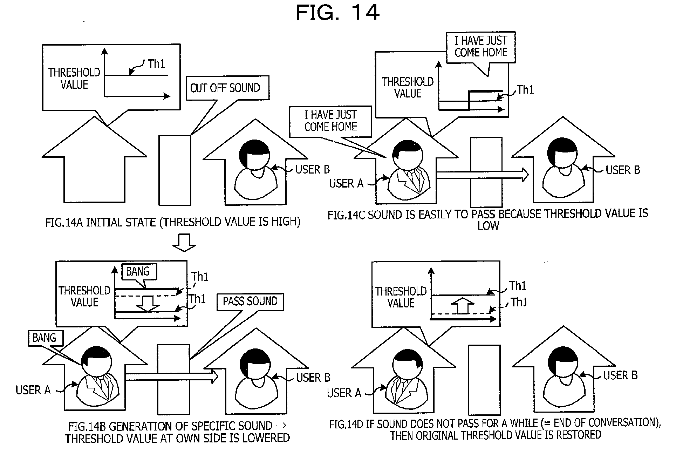

Thus, in an initial state illustrated in FIG. 14A, the threshold value Th1 that is used by the information presentation apparatus 1 at the own side (transmission side) as viewed from the user A is high, and sound generated at the user A side is easily to be cut off. In contrast, if such specific sound as "bang" illustrated in FIG. 14B is generated, then by lowering the threshold value Th1 at the own side, the threshold value Th1 at the own side when it is to be determined whether or not information presentation is to be performed taking it as an opportunity that specific sound generated at the transmission side of information is detected can be moderated for a fixed period of time. Consequently, for the fixed period of time, sound generated at the user A side (transmission side) like "I have just come home" illustrated in FIG. 14C becomes easily to be conveyed to the reception side, and demanded information is easily to be transmitted to the other party side, by which communication can be performed readily.

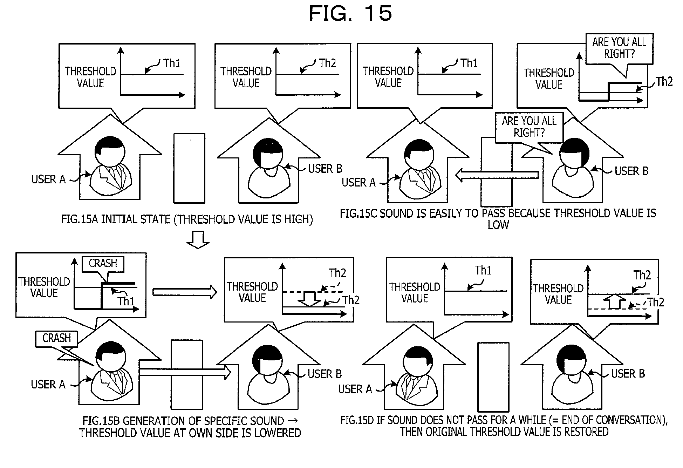

In an initial state illustrated in FIG. 15A, both of the threshold value Th1 at the own side and the threshold value Th2 at the other party side are high, and sound generated at both user sides is easily to be cut off. In contrast, when such specific sound as "crash" illustrated in FIG. 15B is generated at the own side (user A side), the threshold value Th2 of the other party side (user B side) may be lowered. In this manner, taking it as an opportunity that specific sound generated at the transmission side of information is detected, the threshold value Th2 at the other party side that determines whether or not information presentation is to be performed can be moderated for a fixed period of time. Consequently, such sound at the other party side as "are you all right?" illustrated in FIG. 15C becomes easily to be conveyed to the own side. It is to be noted that the threshold value Th1 at the own side and the threshold value Th2 at the other party side may be the same or different from each other. In addition, the threshold value Th1 at the own side and the threshold value Th2 at the other party side may be controlled in an interlocking relationship with each other or may be controlled separately without interlocking therebetween.

In the information presentation system according to the present embodiment, in order to protect the privacy, for example, everyday sound such as conversation is cut off, and only when comparatively rare sound such as opening or closing sound of a door is detected, the sound is conveyed to the other party side. However, if also sound to be conveyed to the other party side like "I have just come home" upon coming home is cut off, then the communication becomes less easily to be performed. In contrast, with the information presentation apparatus 1 according to the present embodiment, when specific sound is detected at least at one of the own side and the other party side, an output condition (in the present embodiment, a threshold value) of at least one of the own side and the other party side is moderated to help convey the sound. Consequently, an interaction system by which communication can be performed readily can be provided.

(Example of Threshold Value Restoration Process)

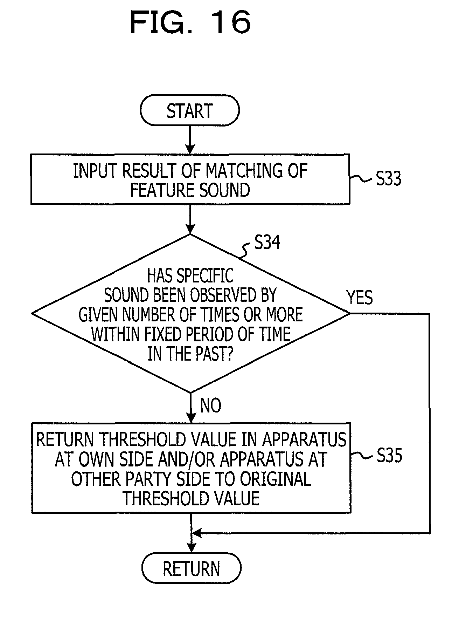

Referring back to FIG. 8, the threshold value changing unit 14a executes a threshold value restoration process (step S 15) after the threshold value changing process. An example of the threshold value restoration process is described with reference to FIG. 16. The threshold value changing unit 14a inputs a result of the matching between the feature sound included in sound data for each time window and the sound clusters in the sound cluster DB 22a (step S33). Then, the threshold value changing unit 14a decides whether the specific sound included in the matching feature sound has been observed by a given number of times or more within a fixed period of time in the past (step S34). If it is decided that the specific sound has been observed by the given number of times or more, then the threshold value changing unit 14a returns the processing to the calling source. On the other hand, if it is decided that the specific sound has not been observed by the given number of times or more, then the threshold value changing unit 14a returns the threshold value of at least one of the information presentation apparatus 1 at the own side and the information presentation apparatus 2 at the other party side to the original value (presentation threshold value of FIG. 13B) (step S35). Thereafter, the processing is returned to the calling source.

In the threshold value restoration process described above, at least one of the threshold value Th1 at the own side and the threshold value Th2 at the other party side is returned to the original value as illustrated in FIG. 14D and FIG. 15D. Consequently, the threshold value can be lowered for a fixed period of time to make it easily to pass sound, and after the communication is promoted, the threshold value is returned to the original value. Consequently, the privacy in everyday life can be protected.

(Example of Feature Sound Learning Process)

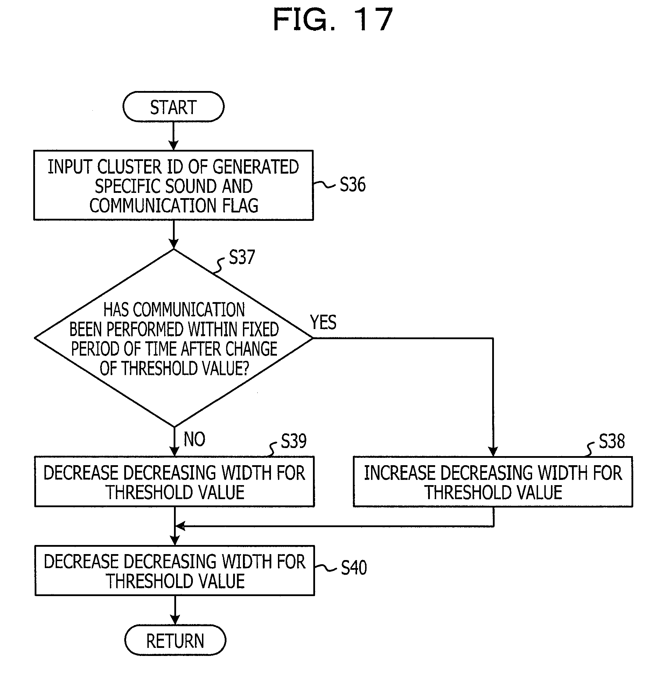

Referring back to FIG. 8, the threshold value changing unit 14a executes a feature sound learning process (step S16) after the threshold value restoration process. Consequently, in the present embodiment, the moderation of an output condition not only can change two values of "whether sound is to be presented or not to be presented" but also can change the value of a threshold value indicative of the intensity in, for example, whether sound is to be presented or not to be presented stepwise to change the level of sound that is to be presented or not to be presented stepwise. In the following, an example of the feature sound learning process is described with reference to FIG. 17.

First, the threshold value changing unit 14a inputs a cluster ID of generated specific sound and a flag (hereinafter referred to as "communication flag") indicative of whether communication has been performed within a fixed period of time after the threshold value for the specific sound was moderated (lowered) (step S36). Then, the threshold value changing unit 14a decides on the basis of the communication flag whether communication has been performed within the fixed period of time after the threshold value for the specific sound was moderated (changed) (step S37). When "1" is set in the communication flag, this indicates that communication has been performed within the fixed period of time after the threshold value for the specific sound was moderated. When "0" is set in the communication flag, this indicates that no communication has been performed within the fixed period of time after the threshold value for the specific sound was moderated.

It is to be noted that whether communication has been performed (whether the communication flag has "1" set therein) can be detected, in the information presentation system of the present embodiment, for example, depending upon whether a number of times of issuance of sound equal to or greater than a fixed number are included interactively within a fixed period of time after the moderation. Alternatively, a button for being pushed every time communication is to be performed may be prepared such that the number of times by which the button is pushed is counted.

If the threshold value changing unit 14a decides that communication has been performed within the fixed period of time after the threshold value for the specific sound was moderated, then the threshold value changing unit 14a increases the decreasing width for the threshold value (step S38). On the other hand, if it is decided that communication has not been performed within the fixed period of time after the threshold value for the specific sound was moderated, then the threshold value changing unit 14a decreases the decreasing width for the threshold value (step S39). Thereafter, the threshold value changing unit 14a sets "0" to the communication flag (step S40) and returns the processing to the calling source.

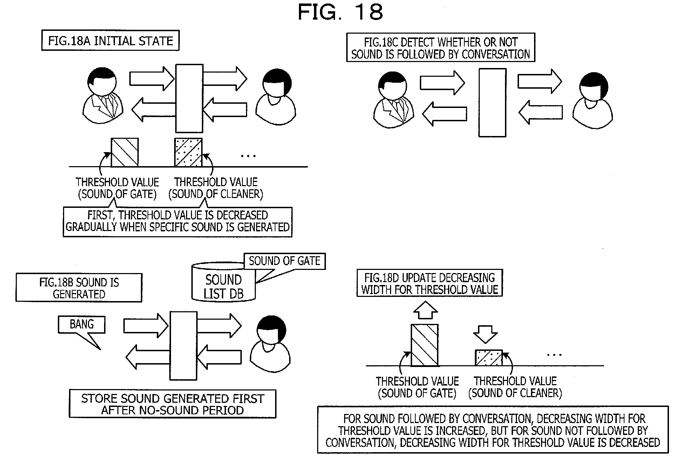

With the feature sound learning process described above, when specific sound such as sound of a gate or sound of a cleaner is acquired, the threshold value is gradually decreased as illustrated in FIG. 18A. Then, sound generated first after lapse of a no-sound period after the specific sound was generated (for example, sound "bang" of a gate) is stored as illustrated in FIG. 18B. At this time, the sound to be stored may be actual sound, or part of sound recorded in the sound cluster DB 22a may be stored.

Then, it is detected whether the sound is followed by conversation as illustrated in FIG. 18C. As a detection method in this instance, for example, detection that a person approaches or detection of a trigger that induces conversation such as that a button is depressed or of conversation sound may be applied.

If "sound of cleaner" illustrated in FIG. 18D is specific sound, then since the sound is followed by conversation, the decreasing width for the threshold value is increased. If "sound of gate" is specific sound, then since the sound is not followed by conversation, the decreasing width for the threshold value is decreased. By increasing, for example, when sound of a cleaner is generated and followed by conversation, the decreasing width for the threshold value for sound of a cleaner in this manner, the passage of later sound for a fixed period of time can be facilitated. The sound volume may be increased in proportion to the magnitude of the decreasing width for the threshold value.

On the other hand, for example, if sound of a gate is generated and is not followed by conversation, passage of later sound for a fixed period of time can be difficult by decreasing the decreasing width for the threshold value for sound of the gate. The sound volume may be decreased in proportion to the magnitude of the decreasing width for the threshold value. With the method described, by increasing or decreasing the threshold value stepwise, it is possible to transmit sound data that may become a trigger for communication with the communication partner while any other sound data is cut off to accurately perform protection of the privacy.

Referring back to FIG. 8, the presentation decision unit 15a decides whether the score of sound data is equal to or higher than a threshold value (step S 17) after the feature sound learning process. If the presentation decision unit 15a decides that the score of sound data is lower than the threshold value, then the presentation decision unit 15a ends the present processing. On the other hand, if the presentation decision unit 15a decides that the score of sound data is equal to or higher than the threshold value, then the transmission unit 16a transmits the sound data (step S18). The presentation decision unit 15a decides whether communication has been performed within the given period of time after the transmission of the sound data (step S 19). If the presentation decision unit 15a decides that communication has been performed within the given period of time, then the presentation decision unit 15a sets "1" to the communication flag (step S20) and then ends the present processing. On the other hand, if the presentation decision unit 15a decides that communication has not been performed within the given period of time, then the presentation decision unit 15a ends the present processing.

If the threshold value is changed to change the output condition for sound data, then where there is an error in extraction of a feature amount of sound data for which moderation of the output condition is to be performed, then the output condition may be moderated in error, resulting in significant degradation of the usability. On the other hand, there is a wide variety of information especially in the real world (for example, life sound), and for setting of "which information is to be presented" in minute detail, much labor is demanded. Therefore, to change the threshold value to change the output condition of sound data is not realistic. Further, since whether or not an output condition is to be moderated may differ depending upon an individual user or an operation environment, it is not preferable to simply moderate an output condition in same conditions in all information presentation systems.

In contrast, with the present embodiment, an output condition is learned adaptively in accordance with a utilization condition of a user. In other words, when an output condition is moderated actually, if the moderation is followed by communication, then the degree of the moderation is increased, but if the moderation is not followed by communication, the moderation degree is decreased. By the countermeasures, such a situation can be suppressed that an output condition is moderated in error and the usability can be improved.

For example, with the present embodiment, sound that may cause a problem of privacy infringement such as conversation is cut off. On the other hand, sound that may give rise to expectation that a change has occurred in a situation of the other party such as, for example, opening or closing sound of a door or clacking sound of some tableware is conveyed to the user at the other party side. Consequently, a rough change of a state of the other party side can be recognized on the real time basis while protecting privacy.

Further, in the present embodiment, different from a case where a different sensor is used to change a presentation condition, there is no necessity to provide a sensor other than the information presentation apparatus 1, and therefore, the system configuration can be simplified. It is to be noted that a threshold value for determining whether or not information presentation is to be performed in the present embodiment is an example of an output condition.

In the description of the information presentation method according to the first embodiment described above, sound of a visual telephone system or the like is taken as an example. However, information that can be handled in the information presentation method according to the embodiment is not limited to sound, but includes media information such as, for example, a moving picture, a still picture and text information and sensor values.

At present, with the sophistication of networks and the spread of mobile apparatuses, social networking site (SNS) services of "gently conveying the state of each other to each other" such as, for example, Twitter (registered trademark), Facebook (registered trademark) or LINE (registered trademark) have been popularized. In the SNS service, a service is supposed by which not only text information but also media information such as video and sound are normally transferred to gently convey a state of each other to each other. The service may be, for example, a service by a normally-coupled visual telephone system that links a parent home and a child home.

In particular, an information presentation system wherein, by interactively conveying life sound or media information to each other, a complicated operation may not be performed and a feeling that one is monitored one-sidedly is reduced while the one can feel such a "sign" that the other party living apart may live in the neighborhood may be an SNS service. In the second embodiment, media information to be presented to the other party is decided at an SNS, and only information to be presented is conveyed to the other party.

<Second Embodiment>

The information presentation system according to the second embodiment can be applied, for example, not only to the information presentation system according to the first embodiment, but also to a system that decides, for example, the submission substance (hereinafter referred to also as "submission information") to an SNS and conveys submission information only to users who have strong friendships on the SNS. In the SNS service, the submitted documents are filtered on the basis of the importance of a word, and it is controlled to what publication range each document is to be presented (whether each document is to be presented restrictively to those having strong friendships or is to be presented also to those having weak friendships). In particular, the information presentation method according to the second embodiment changes the range (publication range) in which media information is to be published on the basis of information of the specific substance obtained from a result of analysis of media information provided, for example, on an SNS. It is to be noted that the publication range may include both of a range of the publication destination for publication and a range of information to be published.

Where the information presentation method according to the present embodiment is applied to submission data exchanged on an SNS, it is possible to detect information to be conveyed to the other party side in response to a decision regarding whether a response is received in response to message information conveyed, for example, within a fixed period of time.

[Example of Functional Configuration of Information Presentation Apparatus]

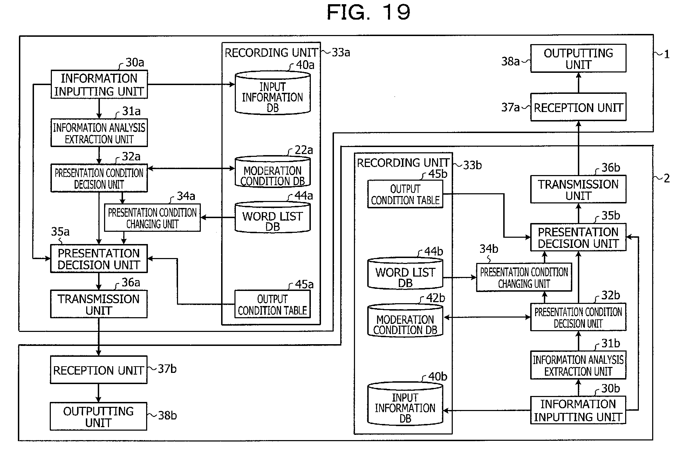

The hardware configuration of the information presentation apparatus according to the second embodiment is similar to the hardware configuration of the information presentation apparatus according to the first embodiment, and therefore, overlapping description of the hardware configuration is omitted herein. Thus, an example of a functional configuration of the information presentation apparatus according to the second embodiment is described with reference to FIG. 19. Since the information presentation apparatus 1 disposed at the user A side and the information presentation apparatus 2 disposed at the user B side have a same functional configuration, description is given here of a functional configuration of the information presentation apparatus 1.

The information presentation apparatus 1 includes an information inputting unit 30a, an information analysis extraction unit 31 a, a presentation condition decision unit 32a, a recording unit 33a, a presentation condition changing unit 34a, a presentation decision unit 35a, a transmission unit 36a, a reception unit 37a and an outputting unit 38a. The recording unit 33a records an input information DB 40a, a moderation condition DB 42a, a word list DB 44a and an output condition table 45a.

The information inputting unit 30a inputs media information to be exchanged on an SNS. The media information includes sound, a moving picture, a still picture and text information (message information). The recording unit 33a records inputted media information into the input information DB 40a. In the input information DB 40a, a timestamp and a media information file name are recorded similarly as in the life sound DB 20a of FIG. 3. In the following, description is given taking submission data as an example of the media information.

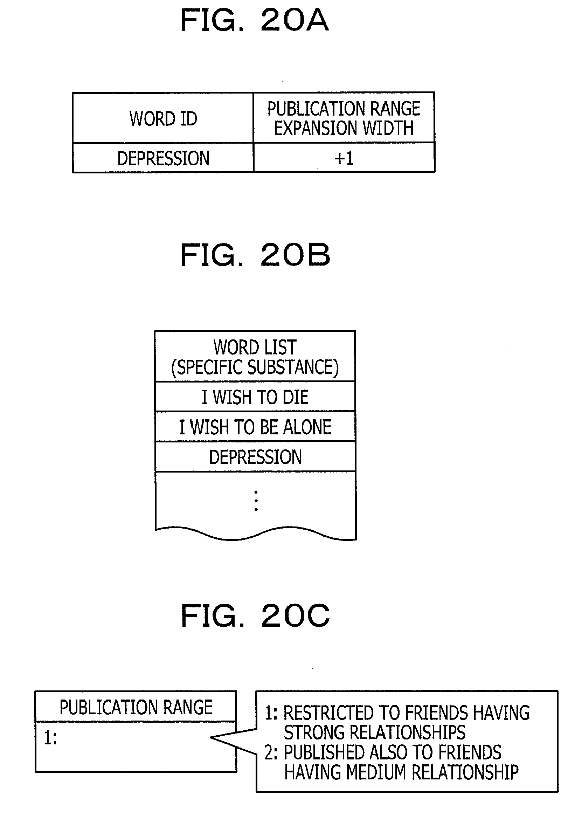

The information analysis extraction unit 31a delimits submission data into time windows and executes morpheme analysis of information for each delimited time window. The presentation condition decision unit 32a performs, on the basis of a result of the analysis received from the information analysis extraction unit 31a, matching with words of the specific substance stored in the word list DB 44a whose example is depicted in FIG. 20B. From a result of the matching, the presentation condition decision unit 32a decides whether the submission data of a processing target includes some words included in the word list DB 44a.

The word list DB 44a has registered therein in advance words that indicate the specific substances that are used but not frequently in the day-to-day such as words used in a dangerous or abnormal scene or words that are used in a scene that involves urgency among the submission data. A word group registered in the word list DB 44a is an example of "specific substance information."

If the submission data of the processing target includes a word registered in the word list DB 44a, then the presentation condition changing unit 34a moderates (changes) the presentation condition for the word. The changed presentation condition is recorded into the moderation condition DB 42a depicted in FIG. 20A. In FIG. 20A, a publication range expansion width is set to "+1" for a word ID corresponding to "depression." Further, as illustrated in FIG. 20B, the output condition table 45a has an initial value for a publication range recorded therein. From FIGs. 20A and 20B, the presentation condition of the word "depression" is a publication range "2" obtained by adding the publication range expansion width of "+1" to the publication range "1." Here, the publication range indicates a range of friends to whom submission data is to be published. For example, where the publication range is "1," the range of friends to whom the submission data is to be published is only friends having strong relationships. Where the publication range is "2," the submission data is published also to friends having a medium relationship. The publication range is an example of the output condition.

The presentation decision unit 35a decides in accordance with the publication range of specific sound whether or not submission data including the specific sound is to be presented to the communication partner. The transmission unit 36a transmits submission data decided to be published by the presentation decision unit 35a to the communication partner to publish the submission data. The reception unit 37a receives submission data transmitted from the information presentation apparatus 2 of the communication partner. The outputting unit 38a outputs the received submission data.

[Example of Information Presentation Process]

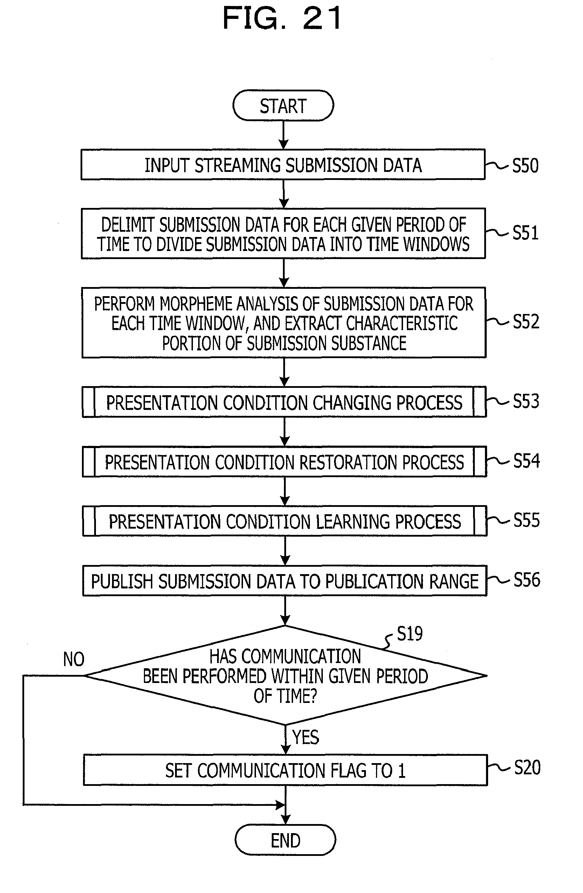

Now, an information presentation process according to the present embodiment is described with reference to FIG. 21. FIG. 21 is a flow chart illustrating an example of the information presentation process according to the second embodiment. The information presentation process of FIG. 21 is executed separately by the information presentation apparatus 1 of the user A and the information presentation apparatus 2 of the user B. In the following, description is given taking the information presentation process executed by the information presentation apparatus 1 as an example.

The information inputting unit 30a inputs submission data on an SNS (step S50). Then, the information analysis extraction unit 31a delimits the inputted submission data for each given period of time and performs processing for each delimited period. In particular, the information analysis extraction unit 31 a delimits the submission data for each given period of time to divide the submission data into time windows (step S51). Then, the information analysis extraction unit 31a executes morpheme analysis of the submission data in a time window to extract a feature portion of the submission substance (step S52). When the morpheme analysis ends, the time window is displaced and a similar process is performed repetitively for the submission data in the displaced time window. Then, the presentation condition changing unit 34a performs a presentation condition changing process (step S53).

(Example of Presentation Condition Changing Process)

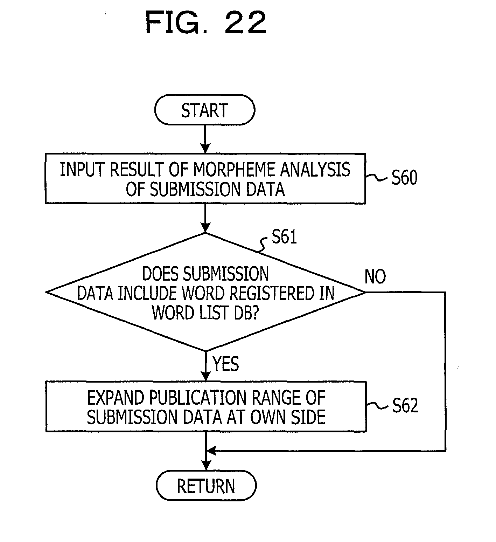

An example of the presentation condition changing process is described with reference to FIG. 22. The presentation condition changing unit 34a receives a result of morpheme analysis of the submission data as an input thereto (step S60). Then, the presentation condition changing unit 34a decides whether the submission data includes a specific word registered in the word list DB 44a (step S61). If the presentation condition changing unit 34a decides that the submission data includes a specific word registered in the word list DB 44a, then the presentation condition changing unit 34a expands the publication range of submission data at the own side (step S62) and then returns the processing to the calling source. On the other hand, if the presentation condition changing unit 34a decides that the submission data does not include any specific word registered in the word list DB 44a, then the presentation condition changing unit 34a returns the processing to the calling source without changing the presentation condition.

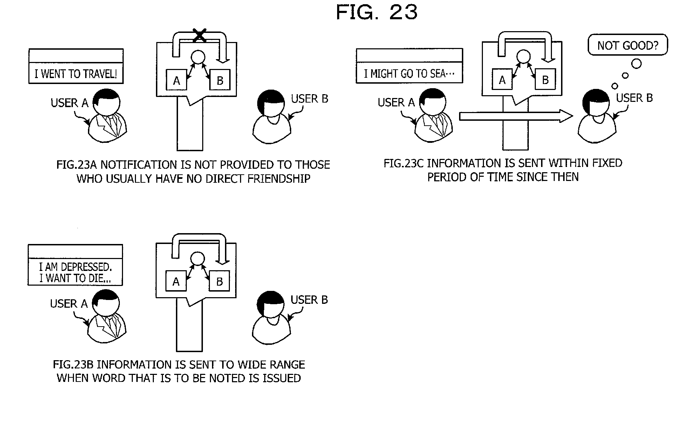

According to the example depicted in FIGs. 20A to 20C, the presentation condition (output condition) to be used by the presentation decision unit 35a is set, in a steady state, to the publication range "1." In this case, in the steady state illustrated in FIG. 23A, submission data "I went to travel" is conveyed only to friends having strong relationships on the basis of the publication range "1" but is not conveyed to those who have no friendships or those who have medium friendships.

On the other hand, where the submission data includes a word of the specific substance to be noted registered in the word list DB 44a such as "depression," according to the example depicted in FIGs. 20A to 20C, the presentation condition to be used by the presentation decision unit 35a is the publication range "2" obtained by adding the publication range expansion width "+1" to the publication range "1." In this case, as depicted in FIG. 23B, the submission data "I went to travel" is conveyed to friends having strong relationships and friends having medium relationships on the basis of the publication range "2." Consequently, in a situation in which communication is to be performed, it can be made easy to perform communication by a notification of submission data.

(Example of Presentation Condition Restoration Process)

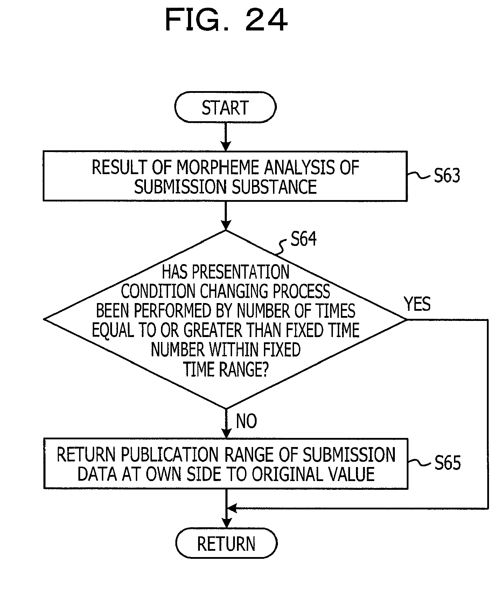

Referring back to FIG. 21, the presentation condition changing unit 34a executes a presentation condition restoration process (step S54) after the presentation condition changing process. An example of the presentation condition restoration process is described with reference to FIG. 24. The presentation condition changing unit 34a receives a result of the morpheme analysis of submission data as an input thereto (step S63). Then, the presentation condition changing unit 34a decides whether the presentation condition changing process has been performed by a number of times equal to or greater than a preset time number within a fixed time range (step S64). If the presentation condition changing unit 34a decides that the presentation condition changing process has been performed by a number of times equal to or greater than the preset time number, then the presentation condition changing unit 34a returns the processing to the calling source. On the other hand, if the presentation condition changing unit 34a decides that the presentation condition changing process has not been performed by a number of times equal to or greater than the preset time number, then the presentation condition changing unit 34a returns the publication range of the submission data at the own side to the original value (step S65). Thereafter, the presentation condition changing unit 34a returns the processing to the calling source.

According to the presentation condition restoration process, by continuing to convey submission data for a fixed period of time until the publication range is returned to its original value as illustrated in FIG. 23C, it is possible to easily perform communication. After communication is promoted, by returning the publication range to its original value, it is possible to protect the privacy in daily life.

(Example of Presentation Condition Learning Process)

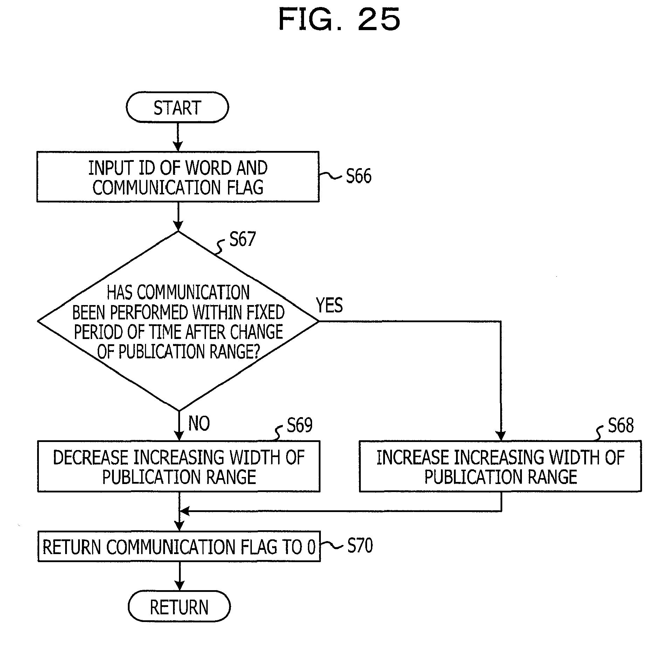

Referring back to FIG. 21, the presentation condition changing unit 34a executes a presentation condition learning process (step S55) after the presentation condition restoration process. In the following, an example of the presentation condition learning process is described with reference to FIG. 25.

The presentation condition changing unit 34a receives, as inputs thereto, the ID of the extracted word and a flag (communication flag) indicative of whether communication has been performed after the publication range was changed using the word (step S66). Then, the presentation condition changing unit 34a decides on the basis of the communication flag whether communication has been performed after the change of the publication range (step S67). If the communication flag has "1" set therein, then this indicates that communication has been performed after the change of the publication range. If the communication flag has "0" set therein, then this indicates that communication has not been performed after the change of the publication range.

If the presentation condition changing unit 34a decides that communication has been performed after the change of the publication range, then the presentation condition changing unit 34a increases the increasing width of the publication range (step S68). On the other hand, if the presentation condition changing unit 34a decides that no communication has been performed after the change of the publication range, then the presentation condition changing unit 34a decreases the increasing width of the publication range (step S69). Thereafter, the presentation condition changing unit 34a sets the communication flag to "0" (step S70) and then returns the processing to the calling source.

Referring back to FIG. 21, the presentation decision unit 35a specifies, after the presentation condition learning process, a range within which the submission data is to be published on the basis of the publication range, and the transmission unit 36a transmits the submission data to the friends in the publication range (step S56). Then, the presentation decision unit 35a decides whether communication has been performed within a given period of time after the transmission of the submission data (step S 19). If the presentation decision unit 35a decides that communication has been performed within the given period of time, then the presentation decision unit 35a sets "0" to the communication flag (step S20) and then ends the present processing. If the presentation decision unit 35a decides that communication has not been performed within the given period of time, then the presentation decision unit 35a ends the present processing.

According to the present embodiment, as depicted in FIG. 23B, for example, after a person submits that "I am depressed," it is possible to sympathize an abnormal change of the person who has submitted that "I am depressed" from the substance submitted continually, and it is possible to perform appropriate communication.

With the information presentation systems according to the first and second embodiments described above, usually transmission of information such as sound data or submission data is cut off for the privacy protection. Then, if event sound different from daily sound or the submission substance different from the ordinary submission substance is generated, then the transmission range of sound or the submission substance to be sent to the communication partner is increased such that a greater amount of information can be conveyed to the communication partner. Consequently, interactive communication can be performed smoothly in the system that allows interactive communication between information presentation apparatuses utilized by users.

Although the information presentation method, the information presentation program and the information presentation apparatus are described in connection with the embodiments, the information presentation method, the information presentation program and the information presentation apparatus according to the present technology are not limited to the embodiments described above but can be modified and improved in various manners without departing from the spirit and scope of the present technology. Further, the embodiments described above can be combined within a range within which no contradiction arises.

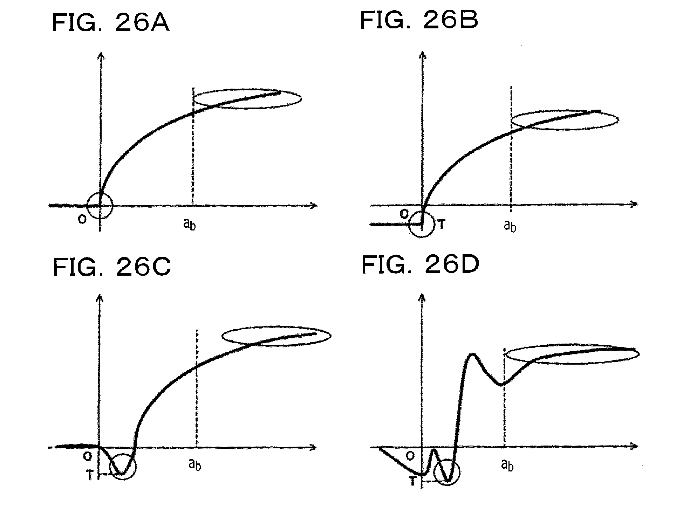

FIGs. 26A to 26D are views illustrating examples of a filter feature according to an embodiment. For example, different examples of the filter of FIG. 9 are illustrated in FIGs. 26A to 26D. In FIGs. 26A to 26D, the axis of abscissa indicates the input and the axis of ordinate indicates the output, and both of the axis of abscissa and the axis of ordinate are dimensionless. FIG. 26A illustrates a power function of equal to or less than one power. FIG. 26B illustrates a filter function whose minimum value is not 0. FIG. 26C illustrates a filter function that does not indicate a minimum value at x = 0. FIG. 26D illustrates a filter function that locally exhibits a great fluctuation in value. Since all of the filter functions satisfy the condition described hereinabove, any of the filters illustrated in FIGs. 26A to 26D may be adopted in place of the power filter in the first and second embodiments. It is to be noted that the examples of the filters depicted in FIGs. 26A to 26D are examples, and the filter applicable to the present technology is not limited to them.

Further, although the output condition in the embodiments described above is changed on the real time basis, the change of the output condition is not limited to this, but a plurality of events (sound data and submission data) may be accumulated such that a batch process is performed so as to change the output condition on the basis of the plurality of pieces of accumulated data.

Additionally, the information presentation method in the embodiments includes (1) dividing the audio data for every specified period, (2) calculating each first feature of each frequency component of each of the divided audio data, (3) calculating each second feature of each of the divided audio data by applying a specified function to at least one component of each first feature, the specified function being a function of x that corresponds to each frequency component, a derivative or subderivative function of the specified function by x being monotonically decreasing within an interval $ab \leq x \leq at$ ($0 \leq ab < at \leq \infty$), the specified function having a lower bound T, and (4) detecting the specified sound in each of the divided audio data based on the each second feature.

REFERENCE SIGNS LIST

    1, 2: Information presentation apparatus
    10a, 10b: Life sound inputting unit
    11a, 11b: Feature amount extraction unit
    12a, 12b: Score decision unit
    13a, 13b: Recording unit
    14a, 14b: Threshold value changing unit
    15a, 15b: Presentation decision unit
    16a, 16b: Transmission unit
    17a, 17b: Reception unit
    18a, 18b: Outputting unit
    20a, 20b: Life sound DB
    21a, 21b: Sound feature amount DB
    22a, 22b: Sound cluster DB
    23a, 23b: Score DB
    24a, 24b: Sound list DB
    25a, 25b: Output condition table
    30a, 30b: Information inputting unit
    31a, 31b: Information analysis extraction unit
    32a, 32b: Presentation condition decision unit
    33a, 33b: Recording unit
    34a, 34b: Presentation condition changing unit
    35a, 35b: Presentation decision unit
    36a, 36b: Transmission unit
    37a, 37b: Reception unit
    38a, 38b: Outputting unit
    40a, 40b: Input information DB
    41a, 41b: Analysis result DB

42a, 42b: Moderation condition DB
44a, 44b: Word list DB
45a, 45b: Output condition table

**Claims**

1. An information presentation method comprising:

monitoring specified information in contents of interactive communications between a first apparatus and a second apparatus, the contents from the first apparatus being outputted to the second apparatus when a first condition is satisfied, the contents from the second apparatus being outputted to the first apparatus when a second condition is satisfied; and
changing, when the specified information is detected in the contents, at least one of the first condition and the second condition so that the contents is outputted more easily.

2. The information presentation method according to claim 1, wherein
the contents are audio data, and the specified information is a specified sound.

3. The information presentation method according to claim 2, wherein
the monitoring includes:

dividing the audio data for every specified period;
calculating each first feature of each frequency component of each of the divided audio data; and
calculating each second feature of each of the divided audio data by applying a specified function to at least one component of each first feature, the specified function being a function of x that corresponds to each frequency component, a derivative or subderivative function of the specified function by x being monotonically decreasing within an interval $ab \leq x \leq at$ ($0 \leq ab < at \leq \infty$), the specified function having a lower bound T, and
detecting the specified sound in each of the divided audio data based on the each second feature.

4. The information presentation method according to claim 1, wherein
the contents are text information, and the specified information is a specified phrase.

5. The information presentation method according to claim 1, further comprising:

returning the changed at least one of the first condition and the second condition to an original condition before the changing based on a number of times in which the specified information is outputted after the changing.

6. The information presentation method according to claim 1, further comprising:

monitoring a communication between the first apparatus and the second apparatus after the changing,
further changing, when the communication is detected, the changed at least one of the first condition and the second condition so that the contents is outputted more easily, and
further changing, when the communication is not detected, the changed at least one of the first condition and the second condition so that the contents is outputted with more difficulty.

7. An information presentation apparatus comprising:

a decision unit configured to monitor specified information in contents of interactive communications between a first apparatus and a second apparatus, the contents from the first apparatus being outputted to the second apparatus when a first condition is satisfied, the contents from the second apparatus being outputted to the first apparatus when a second condition is satisfied; and
a changing unit configured to change, when the specified information is detected in the contents, at least one of the first condition and the second condition so that the contents is outputted more easily.

8. A program which, when executed on the computer, causes the computer to carry out the information presentation method according to any of claims 1 to 6.

# FIG. 1

# FIG. 2

# FIG. 3

| TIMESTAMP | SOUND FILE NAME |
|---|---|
| 2014/6/25 12:30 | 2014-06-25-12-30-40.wav |
| . . . | . . . |

# FIG. 4

| TIMESTAMP | FEATURE AMOUNT |
|---|---|
| 2014/6/25 12:30 | (0.12,0.352,0.41,0,···) |
| ... | ... |

# FIG. 5

| CLUSTER ID | FEATURE AMOUNT | GENERATION FREQUENCY |
|:---:|:---:|:---:|
| 13 | (0.1,0.12,0.1,⋯) | 0.00012 |
| . . . | . . . | . . . |

# FIG. 6

| TIMESTAMP | SCORE | CLUSTER ID |
|---|---|---|
| 2014/6/25 12:30 | 0.01 | 13 |
| . . . | . . . | . . . |

# FIG. 7

| SOUND LIST (SPECIFIC SOUND) |
|---|
| BANG |
| I HAVE JUST COME HOME |
| CRASH |
| I AM ALL RIGHT |
| ⋮ |

# FIG. 8

START

LIFE SOUND DB ⟵ 20

INPUT STREAMING SOUND DATA ~ S10

SOUND FEATURE AMOUNT DB ⟵ 21

DELIMIT SOUND DATA FOR EACH GIVEN PERIOD OF TIME TO DIVIDE SOUND DATA INTO TIME WINDOWS ~ S11

FEATURE AMOUNT CALCULATION PROCESS ~ S12

SOUND CLUSTER DB ⟵ 22

SCORE DB ⟵ 23

PERFORM MATCHING BETWEEN FEATURE AMOUNT AND CLUSTERS IN SOUND CLUSTER DB AND CALCULATE GENERATION FREQUENCY AND SCORE IN ACCORDANCE WITH GENERATION FREQUENCY ~ S13

THRESHOLD VALUE CHANGING PROCESS ~ S14

THRESHOLD VALUE RESTORATION PROCESS ~ S15

FEATURE SOUND LEARNING PROCESS ~ S16

S17
IS SCORE EQUAL TO OR HIGHER THAN THRESHOLD VALUE? — NO

YES

TRANSMIT SOUND DATA ⟋ S18

S19
HAS COMMUNICATION BEEN PERFORMED WITHIN GIVEN PERIOD OF TIME?

NO

YES

SET COMMUNICATION FLAG TO 1 ⟋ S20

END

# FIG. 9

```
        ┌─────────┐
        │  START  │
        └─────────┘
             │
             ▼
┌────────────────────────────────┐
│ ACQUIRE SOUND DATA IN TIME WINDOW │ ～S21
└────────────────────────────────┘
             │
             ▼
┌────────────────────────────────┐
│    HIGH-FREQUENCY EMPHASIS      │ ～S22
└────────────────────────────────┘
             │
             ▼
┌────────────────────────────────┐
│             FFT                 │ ～S23
└────────────────────────────────┘
             │
             ▼
┌────────────────────────────────┐
│     AMPLITUDE CALCULATION       │ ～S24
└────────────────────────────────┘
             │
             ▼
┌────────────────────────────────┐
│         NOISE REMOVAL           │ ～S25
└────────────────────────────────┘
             │
             ▼
┌────────────────────────────────┐
│     MEL-SPECTRUM EXTRACTION     │ ～S26
└────────────────────────────────┘
             │
             ▼
┌────────────────────────────────┐
│         APPLY FILTER            │ ～S27
└────────────────────────────────┘
             │
             ▼
┌────────────────────────────────┐
│      OUTPUT FEATURE AMOUNT      │ ～S28
└────────────────────────────────┘
             │
             ▼
        ┌─────────┐
        │ RETURN  │
        └─────────┘
```

# FIG. 10

FIG. 11A

FIG. 11B

# FIG. 12

```
        ( START )
            │
            ▼
┌─────────────────────────┐
│  INPUT RESULT OF MATCHING OF  │ ~ S30
│      FEATURE SOUND       │
└─────────────────────────┘
            │
            ▼
          ⟋   ⟍          S31
       ⟋         ⟍
    ⟋  IS MATCHING  ⟍      NO
  ⟨ SOUND CLUSTER SPECIFIC SOUND ⟩─────────┐
    ⟍   OF SOUND LIST DB?  ⟋              │
       ⟍         ⟋                        │
          ⟍   ⟋                           │
            │ YES                          │
            ▼                              │
┌─────────────────────────┐              │
│ LOWER THRESHOLD VALUE IN APPARATUS │   │
│  AT OWN SIDE AND/OR APPARATUS AT  │ ~ S32 │
│       OTHER PARTY SIDE      │         │
└─────────────────────────┘              │
            │                              │
            ▼◄─────────────────────────────┘
        ( RETURN )
```

# FIG. 13A

| CLUSTER ID | THRESHOLD VALUE DECREASING WIDTH |
|---|---|
| 0013 | 0.2 |

# FIG. 13B

| PRESENTATION THRESHOLD VALUE |
|---|
| 0.3 |

# FIG. 14

FIG.14A INITIAL STATE (THRESHOLD VALUE IS HIGH)

FIG.14B GENERATION OF SPECIFIC SOUND →
THRESHOLD VALUE AT OWN SIDE IS LOWERED

FIG.14C SOUND IS EASILY TO PASS BECAUSE THRESHOLD VALUE IS
LOW

FIG.14D IF SOUND DOES NOT PASS FOR A WHILE (= END OF CONVERSATION),
THEN ORIGINAL THRESHOLD VALUE IS RESTORED

# FIG. 15

FIG.15A INITIAL STATE (THRESHOLD VALUE IS HIGH)

FIG.15B GENERATION OF SPECIFIC SOUND →
THRESHOLD VALUE AT OWN SIDE IS LOWERED

FIG.15C SOUND IS EASILY TO PASS BECAUSE THRESHOLD VALUE IS LOW

FIG.15D IF SOUND DOES NOT PASS FOR A WHILE (= END OF CONVERSATION), THEN ORIGINAL THRESHOLD VALUE IS RESTORED

# FIG. 16

```
                    ┌─────────────┐
                    │    START    │
                    └─────────────┘
                           │
                           ▼
        ┌──────────────────────────────────┐
        │  INPUT RESULT OF MATCHING OF      │ ～ S33
        │         FEATURE SOUND             │
        └──────────────────────────────────┘
                           │
                           ▼
                        ⟋ S34
                    ╱         ╲
                 ╱   HAS SPECIFIC  ╲
              ╱  SOUND BEEN OBSERVED BY ╲        YES
            ╱  GIVEN NUMBER OF TIMES OR MORE ╲ ────────┐
             ╲ WITHIN FIXED PERIOD OF TIME ╱           │
               ╲    IN THE PAST?        ╱              │
                 ╲                    ╱                │
                    ╲      │      ╱                    │
                        NO │                           │
                           ▼                           │
        ┌──────────────────────────────────┐          │
        │ RETURN THRESHOLD VALUE IN APPARATUS│ ～ S35  │
        │  AT OWN SIDE AND/OR APPARATUS AT   │         │
        │   OTHER PARTY SIDE TO ORIGINAL     │         │
        │         THRESHOLD VALUE            │         │
        └──────────────────────────────────┘          │
                           │                           │
                           ▼◄──────────────────────────┘
                    ┌─────────────┐
                    │   RETURN    │
                    └─────────────┘
```

# FIG. 17

```
                    ┌─────────────┐
                    │    START    │
                    └──────┬──────┘
                           │
                           ▼
        ┌────────────────────────────────────┐
        │ INPUT CLUSTER ID OF GENERATED       │
        │      SPECIFIC SOUND AND             │─ S36
        │      COMMUNICATION FLAG             │
        └──────────────────┬─────────────────┘
                           │
                           ▼
                        ╱─────╲  S37
                     ╱           ╲
                  ╱   HAS COMMUNICATION ╲
               ╱   BEEN PERFORMED WITHIN FIXED ╲  YES
              ⟨   PERIOD OF TIME AFTER CHANGE   ⟩───────────┐
               ╲     OF THRESHOLD VALUE?     ╱              │
                  ╲                       ╱                 │
                     ╲                 ╱                    │
                        ╲─────┬─────╱                       │
                           NO │         S39                 │      S38
                              ▼                             ▼
        ┌────────────────────────────────┐  ┌────────────────────────────────┐
        │ DECREASE DECREASING WIDTH FOR  │  │ INCREASE DECREASING WIDTH FOR  │
        │       THRESHOLD VALUE          │  │       THRESHOLD VALUE          │
        └───────────────┬────────────────┘  └───────────────┬────────────────┘
                        │◄──────────────────────────────────┘
                        ▼
        ┌────────────────────────────────┐
        │ DECREASE DECREASING WIDTH FOR  │─ S40
        │       THRESHOLD VALUE          │
        └───────────────┬────────────────┘
                        │
                        ▼
                 ┌─────────────┐
                 │   RETURN    │
                 └─────────────┘
```

# FIG. 18

FIG.18A INITIAL STATE

THRESHOLD VALUE (SOUND OF GATE)  THRESHOLD VALUE (SOUND OF CLEANER)

FIRST, THRESHOLD VALUE IS DECREASED GRADUALLY WHEN SPECIFIC SOUND IS GENERATED

FIG.18C DETECT WHETHER OR NOT SOUND IS FOLLOWED BY CONVERSATION

SOUND OF GATE

SOUND LIST DB

FIG.18B SOUND IS GENERATED

BANG

STORE SOUND GENERATED FIRST AFTER NO-SOUND PERIOD

FIG.18D UPDATE DECREASING WIDTH FOR THRESHOLD VALUE

THRESHOLD VALUE (SOUND OF GATE)  THRESHOLD VALUE (SOUND OF CLEANER)

FOR SOUND FOLLOWED BY CONVERSATION, DECREASING WIDTH FOR THRESHOLD VALUE IS INCREASED, BUT FOR SOUND NOT FOLLOWED BY CONVERSATION, DECREASING WIDTH FOR THRESHOLD VALUE IS DECREASED

# FIG. 19

# FIG. 20A

| WORD ID | PUBLICATION RANGE EXPANSION WIDTH |
|---|---|
| DEPRESSION | +1 |

# FIG. 20B

| WORD LIST (SPECIFIC SUBSTANCE) |
|---|
| I WISH TO DIE |
| I WISH TO BE ALONE |
| DEPRESSION |
| ⋮ |

# FIG. 20C

| PUBLICATION RANGE |
|---|
| 1: |

1: RESTRICTED TO FRIENDS HAVING STRONG RELATIONSHIPS
2: PUBLISHED ALSO TO FRIENDS HAVING MEDIUM RELATIONSHIP

# FIG. 21

```
                    ┌─────────┐
                    │  START  │
                    └─────────┘
                         │
                         ▼
    ┌──────────────────────────────────────────┐
    │     INPUT STREAMING SUBMISSION DATA        │──S50
    └──────────────────────────────────────────┘
                         │
                         ▼
    ┌──────────────────────────────────────────┐
    │ DELIMIT SUBMISSION DATA FOR EACH GIVEN     │
    │ PERIOD OF TIME TO DIVIDE SUBMISSION DATA   │──S51
    │         INTO TIME WINDOWS                  │
    └──────────────────────────────────────────┘
                         │
                         ▼
    ┌──────────────────────────────────────────┐
    │ PERFORM MORPHEME ANALYSIS OF SUBMISSION    │
    │ DATA FOR EACH TIME WINDOW, AND EXTRACT     │──S52
    │ CHARACTERISTIC PORTION OF SUBMISSION       │
    │              SUBSTANCE                      │
    └──────────────────────────────────────────┘
                         │
                         ▼
    ┌──────────────────────────────────────────┐
    │║  PRESENTATION CONDITION CHANGING PROCESS ║│──S53
    └──────────────────────────────────────────┘
                         │
                         ▼
    ┌──────────────────────────────────────────┐
    │║ PRESENTATION CONDITION RESTORATION PROCESS║│──S54
    └──────────────────────────────────────────┘
                         │
                         ▼
    ┌──────────────────────────────────────────┐
    │║  PRESENTATION CONDITION LEARNING PROCESS ║│──S55
    └──────────────────────────────────────────┘
                         │
                         ▼
    ┌──────────────────────────────────────────┐
    │ PUBLISH SUBMISSION DATA TO PUBLICATION RANGE│──S56
    └──────────────────────────────────────────┘
                         │
                         ▼
                                         S19
                    ◇────────────────◇
       NO          ╱  HAS COMMUNICATION ╲
    ◄──────────────   BEEN PERFORMED      
                   ╲  WITHIN GIVEN PERIOD╱
                    ╲    OF TIME?       ╱
                     ◇────────────────◇
    │                       │ YES
    │                       ▼
    │          ┌──────────────────────────────┐
    │          │  SET COMMUNICATION FLAG TO 1  │──S20
    │          └──────────────────────────────┘
    │                       │
    └───────────────────────┤
                            ▼
                       ┌─────────┐
                       │   END   │
                       └─────────┘
```

# FIG. 22

```
            ( START )
                │
                ▼
┌─────────────────────────────────┐
│ INPUT RESULT OF MORPHEME ANALYSIS │ ～ S60
│       OF SUBMISSION DATA          │
└─────────────────────────────────┘
                │
                ▼           S61
            ╱╲
          ╱     ╲
    ╱   DOES SUBMISSION   ╲      NO
  ╱  DATA INCLUDE WORD REGISTERED IN ╲────┐
    ╲      WORD LIST DB?    ╱           │
      ╲                   ╱             │
          ╲     ╱                       │
            ╲╱                          │
             │ YES                      │
             ▼                          │
┌─────────────────────────────────┐     │
│   EXPAND PUBLICATION RANGE OF    │ ～ S62 │
│   SUBMISSION DATA AT OWN SIDE    │     │
└─────────────────────────────────┘     │
             │◄──────────────────────────┘
             ▼
         ( RETURN )
```

# FIG. 23

I WENT TO TRAVEL!

USER A

A   B

USER B

FIG.23A NOTIFICATION IS NOT PROVIDED TO THOSE
WHO USUALLY HAVE NO DIRECT FRIENDSHIP

I MIGHT GO TO SEA···

USER A

A   B

NOT GOOD?

USER B

FIG.23C INFORMATION IS SENT WITHIN FIXED
PERIOD OF TIME SINCE THEN

I AM DEPRESSED.
I WANT TO DIE...

USER A

A   B

USER B

FIG.23B INFORMATION IS SENT TO WIDE RANGE
WHEN WORD THAT IS TO BE NOTED IS ISSUED

# FIG. 24

```
        ( START )
            │
            ▼
┌─────────────────────────────┐
│  RESULT OF MORPHEME ANALYSIS OF │ ～S63
│     SUBMISSION SUBSTANCE        │
└─────────────────────────────┘
            │
            ▼        ⌐S64
         ╱─────────────╲
        ╱  HAS PRESENTATION  ╲
       ╱ CONDITION CHANGING PROCESS ╲
      ╱  BEEN PERFORMED BY NUMBER OF TIMES ╲  YES
      ╲  EQUAL TO OR GREATER THAN FIXED TIME ╱─────┐
       ╲    NUMBER WITHIN FIXED    ╱             │
        ╲      TIME RANGE?        ╱              │
         ╲─────────────╱                          │
            │ NO                                  │
            ▼                                     │
┌─────────────────────────────┐                  │
│ RETURN PUBLICATION RANGE OF SUBMISSION │ ～S65  │
│  DATA AT OWN SIDE TO ORIGINAL VALUE   │         │
└─────────────────────────────┘                  │
            │                                     │
            ▼◄────────────────────────────────────┘
        ( RETURN )
```

# FIG. 25

START

INPUT ID OF WORD AND
COMMUNICATION FLAG — S66

HAS COMMUNICATION
BEEN PERFORMED WITHIN FIXED
PERIOD OF TIME AFTER CHANGE
OF PUBLICATION RANGE? — S67

YES

NO

DECREASE INCREASING WIDTH OF
PUBLICATION RANGE — S69

INCREASE INCREASING WIDTH OF
PUBLICATION RANGE — S68

RETURN COMMUNICATION FLAG TO 0 — S70

RETURN

FIG. 26A

FIG. 26B

FIG. 26C

FIG. 26D

**Europäisches Patentamt**
**European Patent Office**
**Office européen des brevets**

# EUROPEAN SEARCH REPORT

Application Number

EP 16 18 1541

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/312833 A1 (RIMMER ANDREW SIMON [GB] ET AL) 9 December 2010 (2010-12-09) * paragraphs [0045] - [0051], [0056] - [0058], [0060], [0062] * ----- | 1-8 | INV. H04N7/14 H04L12/18 |
| X | US 2002/075856 A1 (LEBLANC WILFRID [CA]) 20 June 2002 (2002-06-20) * paragraphs [0004], [0052], [0072] - [0074], [0077], [0078], [0081] * ----- | 1,6-8 | |
| A | US 2001/029449 A1 (TSURUFUJI SHIN-ICHI [JP] ET AL) 11 October 2001 (2001-10-11) * abstract * ----- | 1-8 | |

TECHNICAL FIELDS
SEARCHED (IPC)

H04N
H04L

The present search report has been drawn up for all claims

| Place of search | Date of completion of the search | Examiner |
|---|---|---|
| Berlin | 14 December 2016 | Roche, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 18 1541

This annex lists the patent family members relating to the patent documents cited in the above-mentioned European search report.
The members are as contained in the European Patent Office EDP file on
The European Patent Office is in no way liable for these particulars which are merely given for the purpose of information.

14-12-2016

| Patent document cited in search report | | | Publication date | Patent family member(s) | | | Publication date |
|---|---|---|---|---|---|---|---|
| US 2010312833 | A1 | | 09-12-2010 | CN | 101946267 | A | 12-01-2011 |
| | | | | EP | 2225744 | A1 | 08-09-2010 |
| | | | | JP | 5458021 | B2 | 02-04-2014 |
| | | | | JP | 2011512696 | A | 21-04-2011 |
| | | | | KR | 20100096247 | A | 01-09-2010 |
| | | | | TW | 200943956 | A | 16-10-2009 |
| | | | | US | 2010312833 | A1 | 09-12-2010 |
| | | | | WO | 2009081307 | A1 | 02-07-2009 |
| US 2002075856 | A1 | | 20-06-2002 | EP | 1337100 | A2 | 20-08-2003 |
| | | | | US | 2002075856 | A1 | 20-06-2002 |
| | | | | US | 2008049647 | A1 | 28-02-2008 |
| | | | | US | 2011058496 | A1 | 10-03-2011 |
| US 2001029449 | A1 | | 11-10-2001 | NONE | | | |

EPO FORM P0459

For more details about this annex : see Official Journal of the European Patent Office, No. 12/82

**REFERENCES CITED IN THE DESCRIPTION**

**Patent documents cited in the description**

- JP 2011010095 A
- JP 2006093775 A
- JP 2003153322 A
- JP 2013074598 A